# EUROPEAN PATENT APPLICATION

(11) **EP 3 904 459 A1**
(43) Date of publication of application: **03.11.2021**
(21) Application number: 19904051.0
(22) Date of filing: 26.12.2019
(51) Int. Cl.: C08L 97/02, C08H 8/00, C08H 7/00, C07G 1/00, C08L 61/10, C08G 14/04, C09K 8/20, B22C 1/22, D06M 15/17, F16D 69/02

(54) **NOVOLAC PHENOLIC RESINS, PROCESS OF SYNTHESIS OF SAID PHENOLIC RESINS AND USE THEREOF**

(30) Priority: 27.12.2018 BR 102018077291
(71) Applicant: Suzano S.A., 41810-012 Pituba, Salvador, BA (BR)
(72) Inventor: ADRIANO SARAIVA, Sergio, 08613-900 Suzano, SP (BR); BISAN, Daniel, 08730-800 Mogi das Cruzes, SP (BR)
(74) Representative: Gerbino, Angelo
(86) International application number: PCT/BR2019/050569
(87) International publication number: WO 2020/132736

(57) **Abstract**

The present invention relates to a novolac-type phenolic resin synthesis process in which there is the addition of lignin, to a novolac-type phenolic resin comprising lignin, and to the use of said phenolic resin.

## Description

### FIELD OF THE INVENTION

The present invention relates to a novolac-type phenolic resin synthesis process in which there is the addition of lignin, to a novolac-type phenolic resin comprising lignin, and to the use of said phenolic resin.

### BACKGROUND OF THE INVENTION

There are different types of phenolic resins, the main ones being called resole and novolac. The first one is synthesized under alkaline conditions and with stoichiometric excess of aldehyde, while the second one is synthesized with acid catalysis and a sub-stoichiometric amount of aldehyde. Phenolic resins are used in several segments, being a material that has different properties according to the synthesis conditions, such as the aldehyde/phenol molar ratio or the extent of condensation that generates polymers with different molecular weights.

As described in document titled "Characterization of a Novolac Resin Substituing Phenol by Ammonium Lignosulfonate as Filler or Extent", Perez et. al, BioResouce, due to the increase in the cost of phenol monomer, researches have been developed in order to partially replace this monomer with natural polymers that present structures similar to the resin without modifying its properties. One of the possible substituents is lignin, a polydispersed natural polymer composed mainly of phenylpropane units and which has a structure close to that of phenolic resin.

In addition to the economic factor, it is known that the demand for environmental sustainability and, consequently, for materials from renewable and/or biodegradable sources has increased at a very significant level in recent years. In this context, it is important to note that lignin is a component of renewable origin.

As described in document titled "Methods to improve lignin's reactivity as a phenol substitute and as replacement for other phenolic compounds: A brief review", Hu et al., Bioresources, lignin is readily available as a by-product of the paper and cellulose industry and is considered a promising phenol substitute in phenolic resin synthesis, given the growing concerns about the storage of fossil resources and the environmental impact of oil-based products. The document mentions that the interest in the use of lignin as a phenol substitute in phenolic resins has been motivated by the large amount of lignin-containing biomass - particularly when available as a low-cost by-product of the pulping process -, by the high price of phenol and, more recently, environmental considerations.

There are different references in the state of the art which address the use of lignin in phenolic resin synthesis. Greater focus is given to resoles, which, as previously described, are resins produced in alkaline environment and with stoichiometric excess of aldehyde, used mainly as an adhesive on wood panels.

Few documents address the synthesis of novolac-type phenolic resins, mainly how to perform it in a way that it is reproducible on an industrial scale. In addition, among the references related to novolac-type phenolic resins, most of them use lignosulfonates and conifer kraft lignin.

An example is the document titled *"*Utilização de Ligninas em Resinas Fenólicas. 1. Preparação de Novolacas a Partir de Lignossulfonatos.", Aprigio Curvello and Fernando dos Santos, Polímeros, 1999. Such document describes a study in which novolac-type phenolic resins were prepared using ammonium lignosulfonate and sodium lignosulfonate as co-reagents, in partial phenol substitution. Lignosulfonates are a type of lignin recovered as a by-product of the sulfite pulping process. Thus, lignosulfonates are raw materials quite different from lignins obtained by other processes, such as, for example, kraft lignin, soda lignin and organosolv lignin. Kraft lignin, for example, is recovered from black liquor by precipitation under acidic conditions or by filtration from the kraft process. Organosolv lignin is extracted from wood using organic solvents and water with a small amount of acid or base as a catalyst under mild conditions and soda lignin is obtained by the pulping process, in which sodium hydroxide or sodium-anthraquinone hydroxide are used as cooking chemicals to solubilize lignin. As the sulfite pulping process is a process different from the other processes for obtaining lignin, the lignins thus obtained are also different and have different structures. In addition, the process described in said study is performed with sulfuric acid catalysis, which is not used in industrial processes due to the corrosivity of this raw material.

Another example is the document titled "Characterization of a Novolac Resin Substituing Phenol by Ammonium Lignosulfonate as Filler or Extent", Perez et. al, BioResouce, 2007, that describes a study in which two types of novolac resins based on lignosulfonate-type lignin were synthesized in laboratory and compared with a commercial novolac resin. One novolac resin was formulated by incorporating softwood ammonium lignosulfonate directly, as a filler, and the other resin by incorporating ammonium lignosulfonate modified by methylation. The study establishes a fixed condensation time instead of parameterizing residual free formalin, as described herein. In addition, the document does not detail how the distillation was performed. It only presents a generic description, without temperature and vacuum parameters.

Document titled "Methods to improve lignin's reactivity as a phenol substitute and as replacement for other phenolic compounds: A brief review, "Hu et al., Bioresources, previously mentioned, further describes methods to improve the reactivity of lignin as a phenol substitute and as a substitute for other phenolic compounds. One of the methods described is phenolation/phenolysis, by means of which lignin can be treated with phenol in the presence of organic solvents before resin synthesis. During the phenolation process, lignin is thermally treated with phenol in an acidic environment, and this leads to the condensation of phenol with lignin's aromatic ring and side chain. Ether bonds are also cleaved during the process, which decreases the molecular weight of the lignin molecule. The resulting material can react with aldehyde under alkaline or acidic conditions to synthesize resole or novolac-type resins. It is said in the document that phenolation is one of the most used modification methods for lignosulfonates. However, said document only describes how to increase lignin's reactivity and its application to the resin, without describing a process for obtaining said resin using lignin.

There is, therefore, a need in the state of the art for environmentally friendly resins that result from more cost-effective synthesis processes and that, in addition, are capable of conferring higher yield.

In order to meet the environmental and economic needs, novolac-type phenolic resins comprising lignin, preferably kraft lignin, and even more preferably hardwood kraft lignin, as an additional component to phenol, as well as a synthesis process of said resins were developed in the present invention. The addition of lignin, without replacing phenol, is capable of increasing the mass of resin obtained, specifically it increases the yield of the process and a greater amount of final product is obtained. Regarding the environmental need, the phenolic resins obtained by the process of the present invention comprise a renewable source component that gives the resins thus obtained greater environmental sustainability.

In addition, there is also a need in the state of the art for phenolic resin synthesis processes that use reagents that can change the resin's properties according to the added content of said reagents and obtain specific resins according to the desired application.

### SUMMARY OF THE INVENTION

A phenolic resin synthesis process is described herein, comprising the steps of:
a) dissolving lignin in phenol, at a variable temperature ranging from 25 to 150°C;
b) adjusting pH to a variable range between 0 to 2.0;
c) adding aldehyde, at a variable temperature ranging from 40 to 70°C;
d) adjusting the temperature to a variable range between 95 and 105°C, to start reflux at atmospheric pressure;
e) optionally adding aldehyde, under reflux;
f) condensing the obtained product, still under reflux, at a preferred temperature of 100°C, until an amount of less than 1.0% of free aldehyde is present in the reflux water;
g) distilling the obtained product under atmospheric pressure and at a variable temperature ranging from 100 to 200°C;
h) applying a vacuum of at least 500 mmHg to the obtained product at a temperature ranging from 150 to 200°C;
i) solidifying the obtained product at room temperature; and
j) adding a curing agent to the product of step (i).

In a preferred embodiment of the invention, the dissolution step (a) of the phenolic resin synthesis process occurs at a temperature of 60°C.

In one embodiment of the invention, in the dissolution step (a) of the phenolic resin synthesis process, the amount of lignin can vary between 10 to 150% with respect to the mass of phenol used.

In one embodiment of the invention, in the dissolution step (a) of the phenolic resin synthesis process, phenol can be present in molten form or in an aqueous solution.

In one embodiment of the invention, the phenolic resin synthesis process comprises incorporating monomers together with the phenol in the dissolution step (a).

In one embodiment of the invention, lignin is dissolved in phenol in step (a) until complete dissolution.

In one embodiment of the invention, the phenolic resin synthesis process further comprises the addition of glycol at any time during the process. In a preferred embodiment, glycol is added after step (a). In a more preferred embodiment, glycol is added to the step product until complete dissolution.

In a preferred embodiment, the amount of glycol added to the process is of up to 30% with respect to the total mass of the formulation applied in the process.

In a preferred embodiment, glycol is selected from any type of compound in the glycol class. Among the glyco compounds, those selected from glycerin, diethylene glycol, monoethylene glycol or polyethylene glycol are mentioned.

In a preferred embodiment, step (b) of the phenolic resin synthesis process comprises adjusting the pH to a variable range from 1.0 to 1.5.

In an embodiment of the invention, the pH adjustment is performed in step (b) of the phenolic resin synthesis process by adding acid or anhydride.

In one embodiment of the invention, the acid added in step (b) of the phenolic resin synthesis process is selected from the group consisting of organic acids and inorganic acids.

In one embodiment, the acid added in step (b) of the phenolic resin synthesis process is an organic acid selected from the group consisting of xylene sulfonic, dodecylbenzene sulfonic, p-toluene sulfonic, oxalic and phenol sulfonic acids.

In a more preferred embodiment, the organic acid is oxalic acid or phenol sulfonic acid.

In one embodiment, the acid added in step (b) of the phenolic resin synthesis process is an inorganic acid selected from the group consisting of sulfuric and phosphoric.

In an embodiment of the invention, the anhydride added in step (b) of the phenolic resin synthesis process is maleic anhydride or phthalic anhydride.

In a preferred embodiment of the invention, the addition step (c) of the phenolic resin synthesis process occurs at a temperature of 60°C.

In one embodiment of the invention, the addition step (c) of the phenolic resin synthesis process comprises adding 1 to 10% of the total amount of aldehyde added during said process.

In one embodiment, the aldehyde is added in step (c) of the phenolic resin synthesis process as an aqueous solution with a concentration of 30 to 60%.

In a preferred embodiment, the aldehyde is added in step (c) of the phenolic resin synthesis process as an aqueous solution with a concentration of 50%.

In a preferred embodiment, step (d) of the phenolic resin synthesis process comprises adjusting the temperature to 100°C.

In one embodiment of the invention, the addition step (e) of the phenolic resin synthesis process comprises adding 90 to 99% of the total amount of aldehyde added during said process.

In one embodiment of the invention, the reflux of the addition step (e) of the phenolic resin synthesis process has a duration of 1 to 10 hours.

In a preferred embodiment, the aldehyde added to the phenolic resin synthesis process is selected from formic aldehyde (formaldehyde or formalin), acetaldehyde, glyoxal, furfuraldehyde, propinaldehyde, butyraldehyde, isobutyraldehyde, pentanal and paraformaldehyde, among others. In a more preferred embodiment, the aldehyde is formaldehyde.

In an embodiment of the invention, prior to the condensation step (f) of the phenolic resin synthesis process, agents to modify the resin properties are further added.

In a particular embodiment of the invention, the modifying agents are selected from nonylphenol, octylphenol, rosin, melamine, aniline, resorcinol, xylenol, (ortho/meta/para) cresols, and cashew nut oil.

In one embodiment of the invention, a base is added after the condensation step (f) of the phenolic resin synthesis process.

In one embodiment of the invention, the addition of the base results in a pH of 6.5 to 8.0.

In a preferred embodiment, the base is calcium hydroxide or ammonium hydroxide.

In a preferred embodiment of the invention, the distillation step (g) of the phenolic resin synthesis process occurs at a temperature of 140 to 160°C.

In one embodiment of the invention, the addition step (j) of the phenolic resin synthesis process comprises adding 5 to 20% of a curing agent to the product of step (i) of said process.

In one embodiment, the addition step (j) of the phenolic resin synthesis process further comprises the addition of modifying additives.

In a preferred embodiment, the modifying additives are selected from the group consisting of stearic acid, salicylic acid, methanol, ethanol, silica and glycol.

In one embodiment of the invention, after step (j) of the phenolic resin synthesis process, the product is ground or dissolved or transformed into any physical form.

In one embodiment of the invention, lignin used in the process for the synthesis of phenolic resin is hardwood kraft lignin. In a preferred embodiment of the invention, hardwood kraft lignin is eucalyptus kraft lignin.

In a more preferred embodiment of the invention, eucalyptus kraft lignin has the following characteristics: ash lower than 5%, solids content higher than 95%, and pH between 3.0 and 5.0.

In one embodiment of the invention, the aldehyde/phenol molar ratio is between 0.3 to 0.9.

Also described herein is a phenolic resin comprising lignin, phenol, and aldehyde.

In one embodiment of the invention, the phenolic resin further comprises glycol.

In one embodiment of the invention, the phenolic resin has a plate curing time at 154°C of between 20 and 90 seconds.

In another embodiment of the invention, the phenolic resin has a fluidity degree between 12 and 70 mm.

In one embodiment of the invention, the phenolic resin has a capillary melting point of between 60 and 100°C.

In one embodiment, the phenolic resin of the invention can be used in the following applications, although not limited to: abrasive; friction material; impregnation of fabrics and paper; refractory material; molding powder; coating of glass fibers for preparing cutting discs; shell-mold casting; cutting discs for adhesion of abrasive grains; and rubber formulations.

It also reveals the use of the phenolic resin of the invention for, among others, application in abrasive; friction material; impregnation of fabrics and paper; refractory material; molding powder; coating of glass fibers for preparing cutting discs; shell-mold casting; cutting discs for adhesion of abrasive grains; and rubber formulations.

### BRIEF DESCRIPTION OF THE FIGURES

Figure 01 represents the generic chemical structure presumed for lignin.
Figure 02 represents a graph of fluidity *versus* cure of the resin, indicating the modification of these properties during distillation.

### DETAILED DESCRIPTION OF THE INVENTION

The present invention relates to a novolac-type phenolic resin synthesis process in which there is the addition of lignin, to a novolac-type phenolic resin comprising lignin, and to the use of said phenolic resin.

The process described herein differs from those described in the prior art by adding lignin instead of replacing for phenol, as described in the state of art. The process described herein may also differ from those described in the state of the art in that it also comprises the addition of glycol, which is not a raw material commonly used industrially in the synthesis of novolac resins. Such components can promote changes in the resin's properties according to the added content, as well as mold the resin for specific applications for which it can be used.

Thus, the process developed herein allows to obtain different novolac-type phenolic resins through the addition of lignin. By means of the invention, a component of renewable origin is introduced in a fossil-based product. The use of the process described herein allows to obtain resins with characteristics similar to those specified by the market, but with the advantage of being more economical and environmentally sustainable/friendly. The process described herein allows a higher mass of the final product to be obtained, which results in an economic advantage, since the simple addition of lignin, a by-product of the paper and cellulose industry - generally discarded -, shows increase in the yield of the final product obtained. Another advantage of the present invention is the reduction of free phenol in the final product when compared to the same counter type without lignin, since although there is no substitution of phenol in the process of the resin synthesis with lignin, the addition of this last component causes the resin formed to have a lower phenol content in its composition.

Novolac type "phenolic resins" are defined as thermoplastic resins obtained by polycondensation of aldehyde and phenol (or a derivative thereof, cresol, resorcinol, xylenol, etc.) and which become thermoset after the addition of the curing agent and adaptation of temperature.

A phenolic resin synthesis process is described herein, comprising the steps of:
a) dissolving lignin in phenol, at a variable temperature ranging from 25 to 150°C;
b) adjusting pH to a variable range between 0 to 2.0;
c) adding aldehyde, at a variable temperature ranging from 40 to 70°C;
d) adjusting the temperature to a variable range between 95 and 105°C, to start reflux at atmospheric pressure;
e) optionally adding aldehyde, under reflux;
f) condensing the obtained product, still under reflux, at a preferred temperature of 100°C, until an amount of less than 1.0% of free aldehyde is present in the reflux water;
g) distilling the obtained product under atmospheric pressure and at a variable temperature ranging from 100 to 200°C;
h) applying a vacuum of at least 500 mmHg to the obtained product at a temperature ranging from 150 to 200°C;
i) solidifying the obtained product at room temperature; and
j) adding a curing agent to the product of step (i).

In a preferred embodiment of the invention, the dissolution step (a) of the phenolic resin synthesis process occurs at a temperature of 60°C.

In one embodiment of the invention, in the dissolution step (a) of the phenolic resin synthesis process, the amount of lignin can vary between 10 to 150% with respect to the mass of phenol used.

Lignin can be defined, technically, as an amorphous material derived from dehydrogenative reactions of three types of phenylpropanoids: trans-coniferyl (type-G), trans-synaphyl (type-S) and trans-pcumaryl (type-H) alcohols, which can be connected in different ways by covalent bonds, with no repetitive unit (characteristic of polymers), but a complex arrangement of such precursor units that generate macromolecules.

Like every natural matter, lignin presents substantial differences in its composition, structure and purity, which affect its properties and, consequently, its application potentials. Such variations depend on the botanical origin, since the ratio of the generating units (H/G/S) changes according to the type of plant. For example, this ratio is 0-5/95-100/0 in *softwood,* 0-8/25-50/46-75 in hardwood and 5-33/33-80/20-54 in grasses.

In addition, there is another variant, which is the process of extracting lignin, since it is impossible to isolate it without making chemical changes to its structure. One of the main points affected by the extraction process is the molecular mass of the isolated lignin (also called technical lignin), which can be in a very wide range of 260 to 50,000,000 g/mol. The main processes for extracting lignin from lignocellulosic materials are: soda, kraft, sulfite and organosolv.

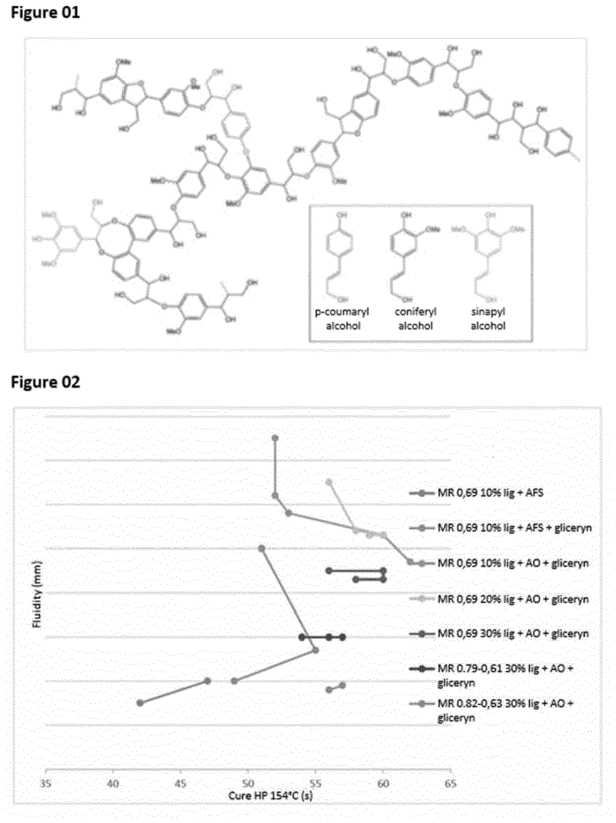

As can be seen, lignin has a very complex chemical structure. There are models that seek to describe it, but there is no full definition. Figure 01 shows a supposed formula for it.

In the dissolution step (a) of the phenolic resin synthesis process, phenol can be present in molten form or in aqueous solution.

In one embodiment of the invention, in the dissolution step (a) of the phenolic resin synthesis process, other monomers can be incorporated together with the phenol, in order to modify the properties of this polymer.

In one embodiment of the invention, lignin is dissolved in phenol in step (a) until complete dissolution.

In one embodiment of the invention, the phenolic resin synthesis process further comprises the addition of glycol at any time during the process. In a preferred embodiment, glycol is added after step (a). Glycol, when added to the product in step (a), can be made until complete dissolution. Preferably, up to 30% of glycol is added with respect to the total mass of the formulation applied in the process during the phenolic resin synthesis process.

According to the invention, glycol is selected from any type of compound of the glyco class. Among the glyco compounds, those selected from glycerin, diethylene glycol, monoethylene glycol or polyethylene glycol are mentioned.

The use of glycol and lignin, within the defined optimum conditions, makes it possible to achieve the desired properties according to the application of the resin obtained by the phenolic resin synthesis process of the invention.

In a preferred embodiment, step (b) of the phenolic resin synthesis process comprises adjusting the pH to a variable range from 1.0 to 1.5.

In an embodiment of the invention, the pH adjustment is performed in step (b) of the phenolic resin synthesis process by adding acid or anhydride. Such compounds can also act as catalysts for the process.

In one embodiment of the invention, the acid added in step (b) of the phenolic resin synthesis process is selected from the group consisting of organic acids and inorganic acids.

In one embodiment, the acid added in step (b) of the phenolic resin synthesis process is an organic acid selected from the group consisting of xylene sulfonic, dodecylbenzene sulfonic, p-toluene sulfonic, oxalic and phenol sulfonic acids.

In a more preferred embodiment, the organic acid is oxalic acid or phenol sulfonic acid.

In one embodiment, the acid added in step (b) of the phenolic resin synthesis process is an inorganic acid selected from the group consisting of sulfuric and phosphoric.

In an embodiment of the invention, the anhydride added in step (b) of the phenolic resin synthesis process is maleic anhydride or phthalic anhydride.

In a preferred embodiment of the invention, the addition step (c) of the phenolic resin synthesis process occurs at a temperature of 60°C.

In one embodiment of the invention, the addition step (c) of the phenolic resin synthesis process comprises adding 1 to 10% of the total amount of aldehyde added during said process.

In one embodiment, the aldehyde is added in step (c) of the phenolic resin synthesis process as an aqueous solution with a concentration of 30 to 60%.

In a preferred embodiment, the aldehyde is added in step (c) of the phenolic resin synthesis process as an aqueous solution with a concentration of 50%.

In a preferred embodiment, step (d) of the phenolic resin synthesis process comprises adjusting the temperature to 100°C.

In one embodiment of the invention, the addition step (e) of the phenolic resin synthesis process comprises adding 90 to 99% of the total amount of aldehyde added during said process.

In one embodiment of the invention, the reflux of the addition step (e) of the phenolic resin synthesis process has a duration of 1 to 10 hours.

In a preferred embodiment, the aldehyde added to the phenolic resin synthesis process is selected from formic aldehyde (formaldehyde or formalin), acetaldehyde, glyoxal, furfuraldehyde, propinaldehyde, butyraldehyde, isobutyraldehyde, pentanal and paraformaldehyde, among others. In a more preferred embodiment, the aldehyde is formaldehyde.

In an embodiment of the invention, prior to the condensation step (f) of the phenolic resin synthesis process, agents to modify the resin properties can be further added.

In a particular embodiment of the invention, the modifying agents are selected from nonylphenol, octylphenol, rosin, melamine, aniline, resorcinol, xylenol, (ortho/meta/para) cresols, and cashew nut oil.

In one embodiment of the invention, a base can be added after the condensation step (f) of the phenolic resin synthesis process.

In one embodiment of the invention, the addition of the base results in a pH of 6.5 to 8.0.

In a preferred embodiment, the base is calcium hydroxide or ammonium hydroxide.

In a preferred embodiment of the invention, the distillation step of the phenolic resin synthesis process occurs at a temperature of 140 to 160°C.

It is noteworthy that in a given experimental condition, different specifications of the resin obtained can be obtained according to the distillation time, as can be seen in figure 02. According to the graph in this figure, the fluidity and curing properties of the resin are modified during the distillation and the consequent removal of volatile products such as water, phenol and residual aldehyde, thus adjusting its specification according to the requirement of each application.

The application of the vacuum to the product obtained in step (g) of the phenolic resin synthesis process of at least 500 mmHg under variable temperature between 150 and 200°C, is performed until obtaining the desired capillary melting point, fluidity degree, and curing time, according to the application that is intended for the resin.

The term "melting point" is defined as the temperature at which a substance changes from a solid to a liquid state. The melting point mentioned herein is the capillary melting point.

The term "fluidity degree" is defined as the flow distance.

The term "curing time" is defined as the time required for a resin kept under a hot surface, at a certain temperature, and under the movement of a spatula, to polymerize and adhere to the surface and no longer to the plate. The curing time is usually expressed in seconds.

In one embodiment of the invention, the addition step (j) of the phenolic resin synthesis process comprises adding 5 to 20% of a curing agent to the product of step (i) of said process.

The term "curing agent" refers to any substance that promotes the crosslinking of the thermoplastic polymer, transforming it into a thermosetting polymer at an appropriate temperature. Non-restrictive examples of the curing agent can be selected from the group consisting of hexamethylenetetramine (HMTA) and p-formaldehyde.

In one embodiment, the addition step (j) of the phenolic resin synthesis process also includes the addition of modifying additives to adjust the fluidity and curing index properties.

In a preferred embodiment, the modifying additives are selected from the group consisting of stearic acid, salicylic acid, methanol, ethanol, silica and glycol.

In an embodiment of the invention, after step (j) of the phenolic resin synthesis process, the product can be ground, dissolved or transformed into any physical form.

In one embodiment of the invention, lignin used in the phenolic resin synthesis process is hardwood kraft lignin, preferably eucalyptus kraft lignin.

The kraft process is the most dominant process in the paper and cellulose industry, in which wood chips are treated with a cooking liquor (a mixture of sodium hydroxide and sodium sulfide) at a temperature range of 150 to 180°C. In a kraft process, lignin is fragmented mainly by cleaving α-aryl ether and β-aryl ether bonds by anions (i.e., hydroxide and hydrosulfide) in the cooking liquor, which leads to an increase in phenolic hydroxy groups in kraft lignin. On the other hand, condensation reactions (for example, crosslinking and repolymerization between lignin molecules) lead to the formation of stable carbon-carbon bonds to alkaline substances, which increases the molecular size of the resulting lignin fragments. Trace amounts of sulfur are also introduced into the kraft lignin during condensation reactions by external nucleophiles (for example, -SH) in the cooking liquor. Kraft lignin is generally recovered from black liquor by precipitation under acidic conditions or by ultrafiltration.

In a more preferred embodiment of the invention, eucalyptus kraft lignin has the following characteristics: ash lower than 5%, solids content higher than 95%, and pH between 3.0 and 5.0.

The ash characteristic, as used here, was determined by burning the material at 850°C for 8 hours.

The solids content, as used here, was determined in an oven at 105°C for 2 hours.

The process of the present invention, as described above, allows the generation of several novolac-type resins containing lignin with different aldehyde/phenol molar ratios. Molar ratio is defined in this context as the result of the quotient between the number of moles of aldehyde and phenol. In the present invention, the range covered is between 0.3 to 0.9.

It should be noted that the phenolic resin synthesis process described in the present invention can generate different resins with different physicochemical properties, since each application of the resin requires different properties. It is possible, through this process, to control these characteristics and obtain the resin as needed.

In a preferred embodiment of the invention, the phenolic resin synthesis process comprises the steps of:
a) dissolving lignin in phenol, at a temperature of 60°C, until total dissolution, in which the amount of lignin can vary between 10 to 150% with respect to the mass of phenol used;
b) optionally adding up to 30% of glycol, with respect to the total mass of the formulation applied in the process, to the product of step (a) until total dissolution;
c) adjusting pH to a variable range from 1.0 to 1.5, by adding acid or anhydride;
d) adding 1 to 10% of the total amount of aldehyde, at a temperature of 60°C;
e) adjusting the temperature to 100°C, to start reflux at atmospheric pressure;
f) optionally adding 90 to 99% of the total amount of aldehyde, under reflux for at least 1 hour and a maximum of 10 hours;
g) condensing the obtained product, still under reflux, at a preferred temperature of 100°C, until an amount of less than 1.0% of free aldehyde is present in the reflux water;
h) distilling the obtained product under atmospheric pressure and at a temperature of 140 to 160°C;
i) applying a vacuum of at least 500 mmHg to the obtained product at a temperature ranging from 150 to 200°C;
j) solidifying the obtained product at room temperature; and
k) adding 5 to 20% of a curing agent to the product of step (j).

In a preferred embodiment, the aldehyde added to the phenolic resin synthesis process is selected from formic aldehyde (formaldehyde or formalin), acetaldehyde, glyoxal, furfuraldehyde, propinaldehyde, butyraldehyde, isobutyraldehyde, pentanal and paraformaldehyde, among others. In a more preferred embodiment, the aldehyde is formaldehyde.

Also described herein is a phenolic resin comprising lignin, phenol, and aldehyde. The resin may further comprise glycol.

In one embodiment of the invention, the phenolic resin has a plate curing time at 154°C of between 20 and 90 seconds.

In another embodiment of the invention, the phenolic resin has a fluidity degree between 12 and 70 mm.

In another embodiment of the invention, the phenolic resin has a capillary melting point of between 60 and 100°C.

In one embodiment, the phenolic resin of the invention can be used in the following applications, although it is not limited to such applications: abrasive; friction material; impregnation of fabrics and papers; refractory material; molding powder; coating of glass fibers for preparing cutting discs; shell-mold casting; cutting discs for adhesion of abrasive grains; and rubber formulations.

It also reveals the use of the phenolic resin of the invention for, among others, application in abrasive; friction material; impregnation of fabrics and papers; refractory material; molding powder; coating of glass fibers for preparing cutting discs; shell-mold casting; cutting discs in the adhesion of abrasive grains; and rubber formulations.

Non-restrictive examples of abrasives are selected from sandpaper, grinding wheels and grinding stones.

Non-restrictive examples of friction materials are selected from clutch discs, brake linings and pads.

As a non-restrictive example of tissue impregnation, there are phenolic felts.

Non-restrictive examples of refractory materials are selected from masses and bricks.

As a non-restrictive example of rubber formulations a tacking agent is mentioned.

### Examples

The examples presented herein are non-exhaustive, used only to illustrate the invention, and should not be used for limiting it.

Examples 1 and 2 describe processes for the synthesis of novolac-type phenolic resins according to the present invention with the addition of different amounts of lignin. In example 1, 30% of lignin was added, with respect to the mass of phenol used. In example 2, the amount of lignin added was 50% with respect to the mass of phenol used.

Examples 3 and 4 represent, respectively, formulations descriptions that were applied in the processes described in examples 1 and 2 and the properties results for the resins thus obtained. In these examples, the ratio of resin to curing agent is 10: 1. The curing agent is not part of the resin formulation, it acts to help cure the resin in order to make it thermoset. In these examples, the curing agent used was HMTA. Still in these examples, the molar ratio aldehyde/phenol in the synthesis process of novolac-type phenolic resins exemplified herein is 0.62.

Example 5 indicates a comparison between the properties of a phenolic resin without lignin and the properties of a phenolic resin obtained according to the synthesis process of the present invention with lignin.

Example 6 demonstrates that the type of catalysis and addition of glycol influence the resin's properties.

In these experiments, eucalyptus kraft lignin was used, with ash characteristics lower than 5%, solids content higher than 95%, and pH between 3.0 and 5.0. The ash characteristic, as used here, was determined by burning the material at 850°C for 8 hours. The solids content, as used here, was determined in an oven at 105°C for 2 hours.

In examples 3 to 6, to determine the capillary melting point of the phenolic resin, a small amount of sprayed sample was placed in a glass capillary that was heated from room temperature to the temperature at which the material softened, due to the passage from solid to liquid.

The curing time on the plate was determined according to the ASTM D4040-6 standard, being defined as the time (expressed in seconds) necessary for the resin kept under a hot surface - at a certain temperature - and stirred with a spatula, to polymerize from thermoplastic to thermoset (visual assessment).

Regarding the flow distance, also called fluidity degree, the methodology used was based on NBR 12164, in which a specimen, in the form of a tablet, is prepared with the sample of resin and hexamethylenetetramine (10:1 mass ratio) and placed on a smooth glass surface under predetermined conditions (temperature of 125 ± 1°C; time of 3 min in the horizontal position and of 20 minutes in the inclined position, and inclination angle of 63 ± 1°) and the final length, resulting from the spread of the tablet, is measured with the aid of a caliper or ruler.

In order to complement the characterization of the resins produced in the present invention, the solubility of the samples in methanol and ethanol were assessed (weighing 30 grams of resin and diluting to 50 mL of the solvent). In the experiments, when there was no precipitate formation or the presence of insoluble material, the resin was defined as soluble resin.

### Example 1

In this example, a novolac-type phenolic resin synthesis process according to the present invention is described with the addition of 30% lignin with respect to the mass of phenol used. To obtain a novolac-type phenolic resin according to the present invention, the following process can be employed:
a) dissolving 390 grams of lignin in 1,300 grams of phenol, at a temperature of 60°C;
b) adjusting the pH value to 1.3 with oxalic acid/water;
c) adding 20 grams of formalin at a temperature of 67.6°C;
d) adjusting the temperature to 100°C, to start reflux at atmospheric pressure;
e) adding 602 grams of formalin, under reflux;
f) condensating the obtained product, still under reflux, at a temperature ranging from 99, 2 to 99.7°C, until an amount of less than 1.0% of free aldehyde is present in the reflux water;
g) distilling the obtained product under atmospheric pressure until a temperature of 150°C is reached;
h) applying a vacuum of at least 600 mmHg to the obtained product at a temperature of 150°C;
i) solidifying the obtained product at room temperature; and
j) adding hexamethylenetetramine (HTMA), at a 10:1 ratio (resin:HTMA) to the product of step (i).

### Example 2

In this example, a novolac-type phenolic resin synthesis process according to the present invention is described with the addition of 50% lignin with respect to the mass of phenol used. To obtain a novolac-type phenolic resin according to the present invention, the following process can be employed:
a) Dissolving 500 grams of lignin in 1,000 grams of phenol, at a temperature of 70°C;
b) adjusting the pH value to 1.3 with phenolic sulfonic acid;
c) adding 15 grams of formalin at a temperature of 70°C;
d) adjusting the temperature to 100°C, to start reflux at atmospheric pressure;
e) adding 381 grams of formalin, under reflux;
f) condensating the obtained product, still under reflux, at a temperature ranging from 98 to 99°C, until an amount of less than 1.0% of free aldehyde is present in the reflux water;
g) distilling the obtained product under atmospheric pressure until a temperature of 150°C is reached;
h) applying a vacuum of at least 610 mmHg to the obtained product at a temperature of 150°C;
i) solidifying the obtained product at room temperature; and
j) add hexamethylenetetramine (HTMA), at a 10:1 ratio (resin:HTMA) to the product of step (i).

### Example 3

This study evaluates the properties of the phenolic resin obtained through the process of example 1 in which there was an addition of 30% of lignin with respect to the mass of phenol used.

The components applied in the phenolic resin synthesis process of the present study are shown in Table 1 below:

**Table 1**

| **Component** | **Weight (g)** |
|---|---|
| Phenol | 1,300 |
| Lignin | 390 |
| Oxalic acid | 16 |
| Water | 16 |
| Formalin 50% (1)* | 20 |
| Formalin 50% (2)** | 602 |

| | |
|---|---|
| ^{∗} First addition of formalin. ^{∗∗} Second addition of formalin. | |

In Table 2, properties of the phenolic resin obtained by means of the present invention process are indicated, in which the components were applied in the amounts expressed in Table 1.

**Table 2**

| **Property of the obtained resin** | **Result** |
|---|---|
| Fluidity | 18 mm |
| Cure HP 154°C | 75" |
| Capillary melting point | 80°C |
| Solubility in methanol | Soluble |
| Solubility in ethanol | Soluble |

With the present study, it was concluded that it was possible to synthesize a novolac-type phenolic resin with the addition of kraft lignin having specifications and characteristics similar to the novolac-type phenolic resins without the addition of lignin.

### Example 4

This study evaluates the properties of the phenolic resin obtained through the process of example 2 in which there was an addition of 50% of lignin with respect to the mass of phenol used.

The components applied in the phenolic resin synthesis process of the present study are shown in Table 3 below:

**Table 3**

| **Component** | **Weight (g)** |
|---|---|
| Phenol* | 1,000 |
| Lignin | 500 |
| Phenol Sulfonic Acid | 16 |
| Water | 50 |
| Formalin 50% (1)* | 15 |
| Formalin 50% (2)** | 381 |

| | |
|---|---|
| ^{∗} First addition of formalin. ^{∗∗} Second addition of formalin. | |

In Table 4, properties of the phenolic resin obtained by means of the present invention process are indicated, in which the components were applied in the amounts expressed in Table 3.

**Table 4**

| **Property of the obtained resin** | **Result** |
|---|---|
| Fluidity | 20 mm |
| Cure HP 154°C | 53" |
| Capillary melting point | 77°C |
| Solubility in methanol | Soluble |
| Solubility in ethanol | Soluble |

With the present study, it was concluded that it was possible to synthesize a novolac-type phenolic resin with the addition of kraft lignin with specifications and characteristics similar to the novolac-type phenolic resins without the addition of lignin.

### Example 5

This study presents a comparison between the properties of a phenolic resin without lignin and the properties of phenolic resins obtained according to the synthesis process of the present invention (comprising lignin).

In the experiments, the resin was ground and hexamethylenetetramine was added, at a 10:1 mass ratio of resin to hexamethylenetetramine.

Table 5 presents a comparison of phenolic resin properties produced with an aldehyde/phenol molar ratio of 0.82, using oxalic acid as a catalyst and different levels of lignin addition.

**Table 5**

| **Property** | **Without lignin** | **Lignin content (%)** | |
|---|---|---|---|
| | | 10 | 30 |
| **Curing Time at 154°C (seconds)** | 98 | 62 | 56 |
| **Fluidity Degree (mm)** | 39 | 17 | 18 |
| **Melting point capillary (°C)** | 84 | 79 | 74 |

Table 6 indicates the effect of lignin addition on the properties of the phenolic resin produced with 0.62 molar ratio and the use of oxalic acid as a catalyst.

**Table 6**

| **Property** | **Without lignin** | **Lignin content (%)** | | | |
|---|---|---|---|---|---|
| | | 30 | 50 | 75 | 100 |
| **Curing Time at 154°C (seconds)** | 122 | 58 | 79 | 59 | 58 |
| **Fluidity Degree (mm)** | >125 | 43 | 32 | 26 | 18 |
| **Capillary melting point (°C)** | 52 | 68 | 70 | 72 | 74 |
| **Solubility in Methanol/ Ethanol** | Yes | Yes | Yes | Yes | Yes |

As can be seen from the results presented in the tables above, depending on the lignin content, resins with different properties are obtained. Thus, for the use of resin in a particular application of interest, the desired range of property values to be achieved in the final product must be known.

### Example 6

The present study demonstrates that the type of catalysis and addition of glycol influence the resin's properties.

Regarding the effect of glycol addition, it can be noted that the presence of this additive helps to increase the resin's fluidity in the presence of lignin, as indicated in table 7 below. In this experiment, 3% of glycerin was added to the formulation.

**Table 7**

| Property | Catalysis with phenolic sulfonic acid, MR = 0.62 and addition of 50% lignin | | Catalysis with oxalic acid, MR = 0.79 and addition of 30% lignin | |
|---|---|---|---|---|
| Addition of glycerin | **No** | **Yes** | **No** | **Yes** |
| Curing Time at 154°C (seconds) | 43 | 44 | 56 | 48 |
| Fluidity Degree (mm) | 20 | 57 | 19 | 24 |
| Capillary melting point (°C) | 77 | 64 | 82 | 74 |
| Solubility in Methanol/Ethanol | Yes | Yes | Yes | Yes |
| Curing Temperature (°C) | 153 | 145 | 156 | 154 |
| Residue Stable at 800°C (%) | 55.3 | 52.5 | 54.5 | 54.7 |

## Claims

1. Phenolic resin synthesis process, **characterized in that** it comprises the steps of:
a) dissolving lignin in phenol, at a variable temperature ranging from 25 to 150°C;
b) adjusting pH to a variable range between 0 to 2.0;
c) adding aldehyde, at a variable temperature ranging from 40 to 70°C;
d) adjusting the temperature to a variable range between 95 and 105°C, to start reflux at atmospheric pressure;
e) optionally adding aldehyde, under reflux;
f) condensing the obtained product, still under reflux, at a preferred temperature of 100°C, until an amount of less than 1.0% of free aldehyde is present in the reflux water;
g) distilling the obtained product under atmospheric pressure and at a variable temperature ranging from 100 to 200°C;
h) applying a vacuum of at least 500 mmHg to the obtained product at a temperature ranging from 150 to 200°C;
i) solidifying the obtained product at room temperature; and
j) adding a curing agent to the product of step (i).

2. Phenolic resin synthesis process, according to claim 1, **characterized in that** the dissolution step (a) occurs at a temperature of 60°C.

3. Phenolic resin synthesis process, according to claim 1 or 2, **characterized in that**, in the dissolution step (a), the amount of lignin can vary between 10 to 150% with respect to the phenol mass used.

4. Phenolic resin synthesis process, according to any of claims 1 to 3, **characterized in that**, in the dissolution step (a), phenol can be present in molten form or in aqueous solution.

5. Phenolic resin synthesis process, according to any of claims 1 to 4, **characterized in that** it comprises incorporating monomers together with phenol in the dissolution step (a).

6. Phenolic resin synthesis process, according to any of claims 1 to 5, **characterized in that** in step (a), lignin is dissolved in phenol until complete dissolution.

7. Phenolic resin synthesis process, according to any of claims 1 to 6, **characterized in that** it further includes the addition of glycol at any time in the process.

8. Phenolic resin synthesis process, according to claim 7, **characterized in that** glycol is added after step (a).

9. Phenolic resin synthesis process, according to claim 8, **characterized in that** glycol is added to the product of step (a) until complete dissolution.

10. Phenolic resin synthesis process, according to any of claims 7 to 9, **characterized in that** up to 30% of glycol is added with respect to the total mass of the formulation applied in the process.

11. Phenolic resin synthesis process, according to any of claims 7 to 10, **characterized in that** glycol is selected from any type of compound of the glyco class.

12. Phenolic resin synthesis process, according to claim 11, **characterized in that** the compounds of the glyco class are selected from glycerin, diethylene glycol, monoethylene glycol or polyethylene glycol.

13. Phenolic resin synthesis process, according to any of claims 1 to 12, **characterized in that** step (b) of the process comprises adjusting the pH to a variable range between 1.0 and 1.5.

14. Phenolic resin synthesis process, according to any of claims 1 to 13, **characterized in that** the pH adjustment is performed in step (b) of the process by adding acid or anhydride.

15. Phenolic resin synthesis process, according to claim 14, **characterized in that** the acid added in step (b) of the process is selected from the group consisting of organic acids and inorganic acids.

16. Phenolic resin synthesis process, according to claim 15, **characterized in that** the acid added in step (b) of the process is an organic acid selected from the group consisting of xylene sulfonic, dodecylbenzene sulfonic, p-toluene sulfonic, oxalic and phenol sulfonic acids.

17. Phenolic resin synthesis process, according to claim 16, **characterized in that** the organic acid is oxalic acid or phenol sulfonic acid.

18. Phenolic resin synthesis process, according to claim 15, **characterized in that** the acid added in step (b) of the process is an inorganic acid selected from the group consisting of sulfuric and phosphoric acid.

19. Phenolic resin synthesis process, according to claim 14, **characterized in that** the anhydride added in step (b) of the process is maleic anhydride or phthalic anhydride.

20. Phenolic resin synthesis process, according to any of claims 1 to 19, **characterized in that** the addition step (c) of the process ocurs at a temperature of 60°C.

21. Phenolic resin synthesis process, according to any of claims 1 to 20, **characterized in that** the addition step (c) comprises adding 1 to 10% of the total amount of aldehyde added during said process.

22. Phenolic resin synthesis process, according to any of claims 1, 20 or 21, **characterized in that** the aldehyde added in step (c) of the process is an aqueous solution with a concentration of 30 to 60%.

23. Phenolic resin synthesis process, according to claim 22, **characterized in that** the aldehyde added in step (c) of the process is an aqueous solution with a concentration of 50%.

24. Phenolic resin synthesis process, according to any of claims 1 to 23, **characterized in that** step (d) comprises adjusting the temperature to 100°C.

25. Phenolic resin synthesis process, according to any of claims 1 to 24, **characterized in that** the addition step (e) comprises adding 90 to 99% of the total amount of aldehyde added during said process.

26. Phenolic resin synthesis process, according to any of claims 1 to 25, **characterized in that** the reflux of the addition step (e) has a duration of 1 to 10 hours.

27. Phenolic resin synthesis process, according to any of claims 1 to 26, **characterized in that** the aldehyde added to the phenolic resin synthesis process is selected from formic aldehyde (formaldehyde or formalin), acetaldehyde, glyoxal, furfuraldehyde, propinaldehyde, butyraldehyde, isobutyraldehyde, pentanal and paraformaldehyde.

28. Phenolic resin synthesis process, according to claim 27, **characterized in that** aldehyde is formaldehyde.

29. Phenolic resin synthesis process, according to any of claims 1 to 28, **characterized in that**, prior to the condensation step (f), agents to modify the resin properties are added.

30. Phenolic resin synthesis process, according to claim 29, **characterized in that** the modifying agents are selected from nonylphenol, octylphenol, rosin, melamine, aniline, resorcinol, xylenol, (ortho/meta/para) cresols, and cashew nut oil.

31. Phenolic resin synthesis process, according to any of claims 1 to 30, **characterized in that** a base is added after the condensation step (f).

32. Phenolic resin synthesis process, according to claim 31, **characterized in that** the addition of the base results in a pH of 6.5 to 8.0.

33. Phenolic resin synthesis process, according to claim 31 or 32, **characterized in that** the base is calcium hydroxide or ammonium hydroxide.

34. Phenolic resin synthesis process, according to any of claims 1 to 33, **characterized in that** the distillation step (g) occurs at a temperature of 140 to 160°C.

35. Phenolic resin synthesis process, according to any of claims 1 to 34, **characterized in that** the addition step (j) comprises adding 5 to 20% of a curing agent to the product of step (i).

36. Phenolic resin synthesis process, according to any of claims 1 to 35, **characterized in that** the addition step (j) also includes the addition of modifying additives.

37. Phenolic resin synthesis process, according to claim 36, **characterized in that** the modifying additives are selected from the group consisting of stearic acid, salicylic acid, methanol, ethanol, silica, and glycol.

38. Phenolic resin synthesis process, according to any of claims 1 to 37, **characterized in that** after step (j), the product is ground or dissolved or transformed into any physical form.

39. Phenolic resin synthesis process, according to any of claims 1 to 38, **characterized in that** lignin is hardwood kraft lignin.

40. Phenolic resin synthesis process, according to claim 39, **characterized in that** hardwood kraft lignin is eucalyptus kraft lignin.

41. Phenolic resin synthesis process, according to any of claims 1 to 40, **characterized in that** the aldehyde/phenol molar ratio is between 0.3 to 0.9.

42. Phenolic resin, **characterized in that** it comprises lignin, phenol, and aldehyde.

43. Phenolic resin, according to claim 42, **characterized in that** it further comprises glycol.

44. Phenolic resin, according to claim 42 or 43, **characterized in that** it has a plate curing time at 154°C of between 20 and 90 seconds.

45. Phenolic resin, according to claim 42 or 43, **characterized in that** it has a fluidity degree between 12 and 70 mm.

46. Phenolic resin, according to claim 42 or 43, **characterized in that** it has a capillary melting point of between 60 and 100°C.

47. Phenolic resin, according to any of claims 42 to 46, **characterized in that** it is used in the following applications: abrasive; friction material; impregnation of fabrics and papers; refractory material; molding powder; coating of glass fibers for preparing cutting discs; shell-mold casting; cutting discs for adhesion of abrasive grains; and rubber formulations.

48. Use of a phenolic resin defined in any of claims 42 to 46, **characterized in that** it is for application on abrasives; friction material; impregnation of fabrics and papers; refractory material; molding powder; coating of glass fibers for preparing cutting discs; shell-mold casting; cutting discs for adhesion of abrasive grains; and rubber formulations.

49. Invention of product, process, system or use, **characterized in that** it comprises one or more elements described in the present patent application.
